# EUROPEAN PATENT APPLICATION

(11) **EP 4 779 515 A1**
(43) Date of publication of application: **22.07.2026**
(21) Application number: 24865833.8
(22) Date of filing: 11.09.2024
(51) Int. Cl.: G06K 7/14, G06K 19/06, H04W 4/80, H04W 88/16, G06Q 10/08, G06Q 50/06, G06Q 30/06, G09F 3/20, G06K 7/10

(54) **ELECTRONIC SHELF LABEL RECOGNITION SYSTEM**

(30) Priority: 11.09.2023 KR 20230120676; 18.04.2024 KR 20240052392
(71) Applicant: SOLUM CO., LTD., Gyeonggi-do 16914 (KR)
(72) Inventor: LEE, Hyun Suk, Suwon-si, Gyeonggi-do 16543 (KR); LEE, Chan, Anyang-si, Gyeonggi-do 13994 (KR)
(74) Representative: Kraus & Lederer PartGmbB
(86) International application number: PCT/KR2024/013789
(87) International publication number: WO 2025/058394

(57) **Abstract**

According to one embodiment, an electronic shelf label recognition system includes a plurality of electronic shelf labels disposed on a shelf on which a plurality of products are displayed and corresponding respectively to the plurality of products, a plurality of cameras configured to capture the plurality of electronic shelf labels, and an electronic shelf label management server configured to manage the plurality of electronic shelf labels, recognize the plurality of electronic shelf labels captured by the plurality of cameras, and manage location information corresponding to the recognized plurality of electronic shelf labels.

## Description

### [Technical Field]

Embodiments of the present disclosure relate to an electronic shelf label recognition system, and more particularly, to a system for recognizing an electronic shelf label captured by a camera.

### [Background Art]

An electronic shelf label (ESL) refers to an electronic paper (e-paper) terminal that displays product information such as price and country of origin for each product in real time through a wireless communication network at a product display shelf in a store. The electronic shelf label is often referred to as ESL, which is an abbreviation for Electronic Shelf Label. By using electronic shelf labels, desired information can be displayed at any time without the need to frequently replace paper price tags. Recently, the market for electronic shelf labels has been expanding mainly in various retail stores such as hypermarkets, supermarkets, health and beauty (H&B) stores, and fashion stores.

An electronic shelf label system generally includes a gateway responsible for wired or wireless communication and a tag device configured to display product information. When product information is transmitted from a central ESL management server to the gateway using Internet of Things (IoT) technology, the gateway delivers the information to a plurality of ESL tags through wireless communication. The tags may display characters, barcodes, photographs, and the like.

Electronic paper display used in an electronic shelf label is a technology that can replace existing displays such as electronic liquid crystal displays (LCDs) and light emitting diodes (LEDs) and paper functions. The electronic paper display consumes little power and allows stored information to be viewed even when power is turned off.

By using the electronic shelf label, inventory status, price changes, discount periods, and the like for each product may be automatically reflected throughout the entire store simultaneously, thereby improving store management efficiency. In addition, the store may reduce costs associated with printing price tags.

Meanwhile, in large store spaces such as hypermarkets and department stores, it is not easy to find a desired product. In order to solve this problem, the location of the corresponding product may be identified by recognizing an electronic shelf label disposed near the product, and a store administrator or a consumer may check the location of the product or information related to the product. However, a barcode or a QR code displayed on the electronic shelf label should be scanned by a specific terminal, and even when the barcode or QR code is photographed by a camera, there is a problem in that identification is difficult due to issues such as the resolution of the camera and a photographing distance.

### [Disclosure]

### [Technical Problem]

Various embodiments of the present disclosure provide an electronic shelf label recognition system capable of displaying a specific identification code on an electronic shelf label and recognizing the electronic shelf label by capturing the displayed identification code using a camera, thereby enabling location information of a corresponding product and product-related information to be easily managed.

The problems to be solved by the embodiments of the present disclosure are not limited to those described above, and other problems not mentioned herein will be clearly understood by those skilled in the art from the present specification and the accompanying drawings.

### [Technical Solution]

According to one embodiment, there is provided an electronic shelf label recognition system, including: a plurality of electronic shelf labels disposed on a shelf on which a plurality of products are displayed, the plurality of electronic shelf labels corresponding respectively to the plurality of products; a plurality of cameras configured to capture the plurality of electronic shelf labels; and an electronic shelf label management server configured to manage the plurality of electronic shelf labels, recognize the plurality of electronic shelf labels captured by the plurality of cameras, and manage location information corresponding to the recognized plurality of electronic shelf labels, in which the electronic shelf label management server generates a pattern image corresponding to each of the plurality of electronic shelf labels, controls the generated pattern image to be displayed on a corresponding electronic shelf label, acquires the displayed pattern images through the plurality of cameras, and recognizes the electronic shelf labels based on the acquired pattern images.

The electronic shelf label recognition system may further include a shared gateway connected to the plurality of electronic shelf labels through a predetermined network, in which the electronic shelf label management server may manage the plurality of electronic shelf labels through the shared gateway.

The electronic shelf label management server may generate a pattern image corresponding to a recognized electronic shelf label when the plurality of electronic shelf labels are recognized through the shared gateway, and transmit the generated pattern image to the corresponding electronic shelf label through the shared gateway.

The electronic shelf label management server may transmit the generated pattern image to the corresponding electronic shelf label through the shared gateway when product information including price information is transmitted to the plurality of electronic shelf labels through the shared gateway.

The electronic shelf label management server may control a timing at which the generated pattern image is displayed on the corresponding electronic shelf label and a capturing timing of the plurality of cameras to be synchronized.

The plurality of cameras may be disposed on a shelf facing the shelf on which the plurality of products are displayed.

The electronic shelf label management server may store an electronic shelf label index corresponding to the generated pattern image in a matched manner.

The electronic shelf label management server may identify the stored electronic shelf label index corresponding to each of the recognized electronic shelf labels.

The electronic shelf label management server may update a planogram by mapping location information corresponding to the recognized plurality of electronic shelf labels with locations of the plurality of products and locations of shelves on which the plurality of products are arranged.

The pattern image may be an N x N matrix pattern image (N being a natural number greater than or equal to 2).

### [Advantageous Effects]

According to various embodiments of the present disclosure, an electronic shelf label recognition system displays a specific identification code on an electronic shelf label and recognizes the electronic shelf label by capturing the displayed identification code using a camera. Therefore, location information of a corresponding product and product-related information may be easily managed.

Effects according to the embodiments are not limited to the effects described above, and other effects not mentioned herein will be clearly understood by those skilled in the art from the present specification and the accompanying drawings.

### [Description of Drawings]

FIG. 1 is a perspective view illustrating an electronic shelf label.
FIG. 2 is a schematic diagram illustrating an electronic shelf label recognition system according to an embodiment.
FIG. 3 is a detailed schematic diagram illustrating an ESL management server 300 illustrated in FIG. 2.
FIG. 4 is a flowchart illustrating a method for recognizing an electronic shelf label according to another embodiment.
FIG. 5 is an exemplary diagram illustrating an example using a recognition result of an electronic shelf label according to still another embodiment.

### [Mode for Invention]

The terms used in the embodiments are selected from currently widely used general terms as much as possible in consideration of functions in the present disclosure. However, the terms may vary depending on the intentions of those skilled in the art, precedents, or the emergence of new technologies. In addition, in certain cases, terms arbitrarily selected by the applicant may also be used, and in such cases, the meanings of the terms will be described in detail in the corresponding portions of the description of the disclosure. Accordingly, the terms used in the present disclosure should be defined based not merely on their names but on the meanings of the terms and the overall contents of the present disclosure. Throughout the specification, when a part is described as "including" a certain component, this means that other components may be further included unless specifically stated otherwise, rather than excluding other components. In addition, terms such as "unit" and "module" described in the specification refer to a unit that processes at least one function or operation, and may be implemented in hardware or software, or in a combination of hardware and software.

As used herein, when an expression such as "at least one of" precedes a list of elements, the expression modifies the entire list of elements rather than each individual element. For example, the expression "at least one of a, b, and c" should be interpreted as including a, b, c, a and b, a and c, b and c, or a, b, and c.

Hereinafter, embodiments of the present disclosure will be described in detail with reference to the accompanying drawings so that those skilled in the art may easily implement the present disclosure.

In the embodiments, an "electronic price label" or "electronic shelf label" refers to a device that displays detailed information such as a product name, price, and barcode on a plastic tag. Such a device is also referred to as an ESL. A method may be used in which software related to a gateway is installed where the electronic shelf label is required, and information to be displayed on the electronic shelf label is set and applied. Here, the gateway performs a role of a public communication network with a computer when the network and a plurality of electronic shelf labels are interconnected. For example, the gateway may act as an intermediary between the electronic shelf label, a store point-of-sale (POS) device, and a product information management server, and through this intermediary, product information may be transmitted to or received from a display of the electronic shelf label, for example, electronic paper or an electronic panel, so as to provide product information to consumers. Here, electronic paper (e-paper) is a display device having a texture similar to that of general paper, causing less eye strain even when viewed for a long time, and allowing writing and erasing freely on the screen. The electronic paper consumes less power, and electronic ink (e-ink), which is a core technology of electronic paper, has a memory effect so that displayed information is maintained even when power is cut off.

In an embodiment, a "user terminal" may be implemented as a computer or a portable terminal capable of accessing a server or another terminal through a network. Here, the computer may include, for example, a notebook, a desktop, a laptop, or a VR head-mounted display (HMD) (for example, HTC VIVE, Oculus Rift, GearVR, DayDream, PSVR, etc.) equipped with a web browser. The VR HMD may include PC-based devices (for example, HTC VIVE, Oculus Rift, FOVE, Deepon, etc.), mobile-based devices (for example, GearVR, DayDream, Baofeng Mojing, Google Cardboard, etc.), console-based devices (PSVR), and standalone models independently implemented (for example, Deepon, PICO, etc.). The portable terminal may be, for example, a wireless communication device that ensures portability and mobility, and may include various devices equipped with communication modules such as Bluetooth Low Energy (BLE), NFC, RFID, ultrasonic communication, infrared communication, Wi-Fi, or LiFi, in addition to smartphones, tablet PCs, and wearable devices. In addition, the "network" refers to a connection structure capable of exchanging information among nodes such as terminals and servers, and may include a local area network (LAN), a wide area network (WAN), the Internet (WWW), wired/wireless data communication networks, telephone networks, and wired/wireless television communication networks. Examples of the wireless data communication network include 3G, 4G, 5G, 3GPP (3rd Generation Partnership Project), LTE (Long Term Evolution), WiMAX (World Interoperability for Microwave Access), Wi-Fi, Bluetooth communication, infrared communication, ultrasonic communication, visible light communication (VLC), and LiFi, but are not limited thereto.

In an embodiment, a "planogram" also referred to as a product display diagram, refers to arranging and representing a product assortment in a store in an optimized manner so as to meet customer needs or, from a business perspective, to induce additional purchases such as cross-selling and up-selling. The planogram defines locations and quantities of products to be displayed and may include detailed specifications regarding the number of product facings and spacing between the products. The planogram may include shelf layout, height, width, inclination, and depth, as well as required or recommended cooling conditions, and other information considered necessary or useful, for example, for fresh meat and white wine. Rules and theories for creating a planogram may be established based on merchandising practices. According to an embodiment, based on recognition results of an electronic shelf label recognition system, product information and locations of displayed products may be identified and used to update a pre-established planogram. Accordingly, it is possible to update the planogram according to product location recognition, and in conjunction with the planogram, products may be automatically assigned to respective electronic shelf labels.

In an embodiment, the terms "pattern image," "identification marker," and "matrix pattern image" should be understood as having the same meaning or as representing a broader or narrower concept. These terms refer to information displayed on an electronic shelf label to facilitate image processing or vision recognition of captured images of electronic shelf labels having a small size, for example, about 1 inch to 3 inches.

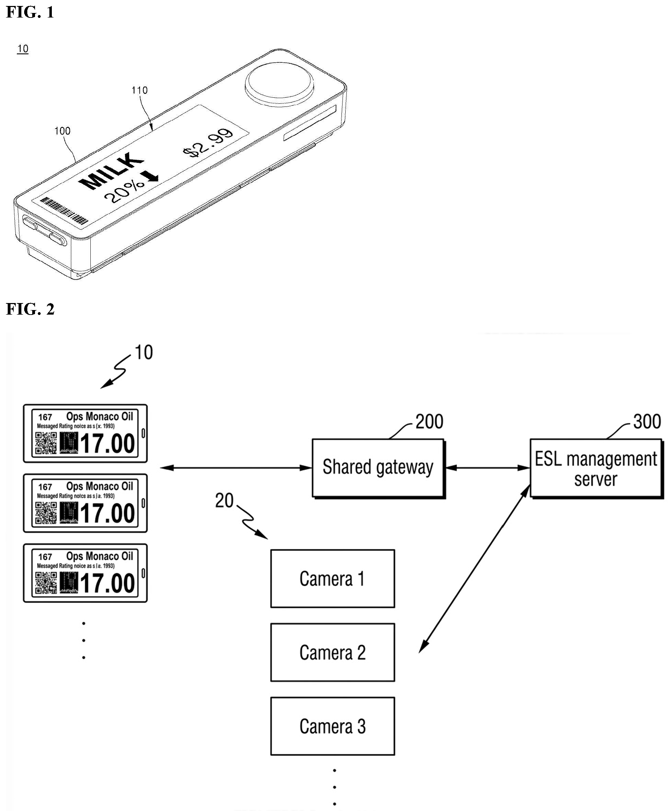

FIG. 1 is a perspective view illustrating an electronic shelf label according to one embodiment.

Referring to FIG. 1, an electronic shelf label 10 according to one embodiment may be disposed or coupled to a product display shelf in a retail space and may display information about a product (hereinafter referred to as "product information"). For example, the electronic shelf label 10 may receive product information from a server (not illustrated) and visually display the product information received from the server to provide the product information to a user. The electronic shelf label 10 may also be referred to as an electronic shelf label (ESL) or an electronic information label (EIL) depending on embodiments.

According to an embodiment, the electronic shelf label 10 may include a housing 100 and a display 110.

The housing 100 may form an overall exterior appearance of the electronic shelf label 10, and components of the electronic shelf label 10 may be disposed in an internal space of the housing 100. For example, a printed circuit board (not illustrated) including a processor for controlling the operation of the electronic shelf label 10, a communication module (not illustrated) for wireless communication with a server, and/or a battery (not illustrated) may be disposed in the internal space of the housing 100, although the configuration is not limited thereto.

According to one embodiment, as illustrated in FIG. 1, the housing 100 may be formed in a generally rectangular parallelepiped shape. However, the shape of the housing 100 is not limited to the illustrated embodiment. In another embodiment, the housing 100 may be formed in a polygonal prism shape in addition to the rectangular parallelepiped shape.

The display 110 may be disposed such that at least a portion thereof is exposed to an outer surface of the housing 100 and may output visual information. For example, the display 110 may output product information received from the server, although embodiments are not limited thereto. In the present disclosure, the product information may include at least one of price information, manufacturer information, country-of-origin information, discount information, or identification information (e.g., a barcode or a QR code), and the expression may have the same meaning throughout the present specification.

In an embodiment, the display 110 may output an identification marker under the control of an ESL management server or an image processing server so that recognition of the electronic shelf label may be facilitated. The identification marker may be a matrix pattern image, but is not limited thereto. For example, the matrix pattern may be a black-and-white pattern such as a 2×2, 3×3, or 4×4 pattern.

The display 110 may output the product information using power supplied from a battery accommodated in the internal space of the housing 100.

FIG. 2 is a schematic diagram illustrating an electronic shelf label recognition system according to an embodiment.

Referring to FIG. 2, the electronic shelf label recognition system may include a plurality of electronic shelf labels 10, a plurality of cameras 20 configured to capture the electronic shelf labels 10, a shared gateway 200, and an ESL management server 300.

The plurality of cameras 20 capture images of the electronic shelf labels 10. In an embodiment, an image obtained by capturing an identification marker or a pattern displayed on the electronic shelf label 10 may be transmitted to the ESL management server 300. A plurality of cameras 20 may be disposed on a shelf opposite to the shelf on which the electronic shelf labels 10 are arranged, or may be disposed at positions from which the electronic shelf labels 10 can be captured. The plurality of cameras 20 may be connected to the ESL management server 300 via a wired or wireless connection, and may capture the electronic shelf labels 10 under the control of the ESL management server 300. In addition, the plurality of cameras 20 may be connected through the shared gateway 200 to transmit and receive data and control signals to and from the ESL management server 300.

The plurality of cameras 20 may capture shelf images including shelves on which a plurality of products are displayed and the plurality of electronic shelf labels 10 corresponding to the respective products. A range in which the shelf can be captured may vary depending on specifications or a field of view of the camera. For example, when capturing a shelf having a length of 10 m, the electronic shelf labels 10 arranged on the shelf may be captured by a camera disposed on an opposite shelf spaced apart by a predetermined distance, that is, at a fixed position.

The ESL management server 300 may transmit product information and price information to the plurality of electronic shelf labels 10 through the shared gateway 200.

The ESL management server 300 manages the plurality of electronic shelf labels 10 and recognizes the plurality of electronic shelf labels 10 captured by the plurality of cameras 20. The ESL management server 300 may manage location information corresponding to the recognized electronic shelf labels 10.

The ESL management server 300 may generate pattern images corresponding to each of the plurality of electronic shelf labels 10. The pattern image may be a matrix pattern image. The ESL management server 300 may manage and store electronic shelf labels and pattern images by matching them with each other. The ESL management server 300 may control the pattern images to be displayed on the corresponding electronic shelf labels 10. For example, when the pattern image is to be displayed on the electronic shelf label 10, such as when the store opens or when product information needs to be updated, the ESL management server 300 may transmit the pattern images to the plurality of electronic shelf labels 10 through the shared gateway 200 and control the electronic shelf labels to display the pattern images. In this case, the pattern image and a display control command may be transmitted together. Alternatively, the pattern image may be transmitted in advance and stored in the electronic shelf label, and only a display control command may be transmitted later. The ESL management server 300 may control the capturing operation of the plurality of cameras 20 and receive pattern images acquired by the plurality of cameras 20. The ESL management server 300 may recognize the corresponding electronic shelf labels based on the received pattern images.

In an embodiment, when the plurality of electronic shelf labels are recognized through the shared gateway 200, the ESL management server 300 may generate pattern images corresponding to the recognized electronic shelf labels. Thereafter, when a store opens, product information is updated, or automatic assignment of product information is required, the generated pattern images may be transmitted to the corresponding electronic shelf labels 10 through the shared gateway 200, and the plurality of cameras 20 may be controlled to acquire the pattern images displayed on the corresponding electronic shelf labels 10.

In an embodiment, when transmitting product information including price information to the plurality of electronic shelf labels 10 through the shared gateway 200, the ESL management server 300 may transmit a pre-generated pattern image to the corresponding electronic shelf label through the shared gateway 200.

In an embodiment, the ESL management server 300 may control timing at which a pre-generated pattern image is displayed on the corresponding electronic shelf label 10 and a capturing timing of the plurality of cameras 20 so as to be synchronized with each other. For example, when the pattern image transmitted to the electronic shelf label 10 is controlled to be displayed for 1 minute or 10 minutes starting from 10 a.m., the camera 20 capturing the electronic shelf label 10 may be controlled to capture the electronic shelf label 10 once or multiple times during the display period.

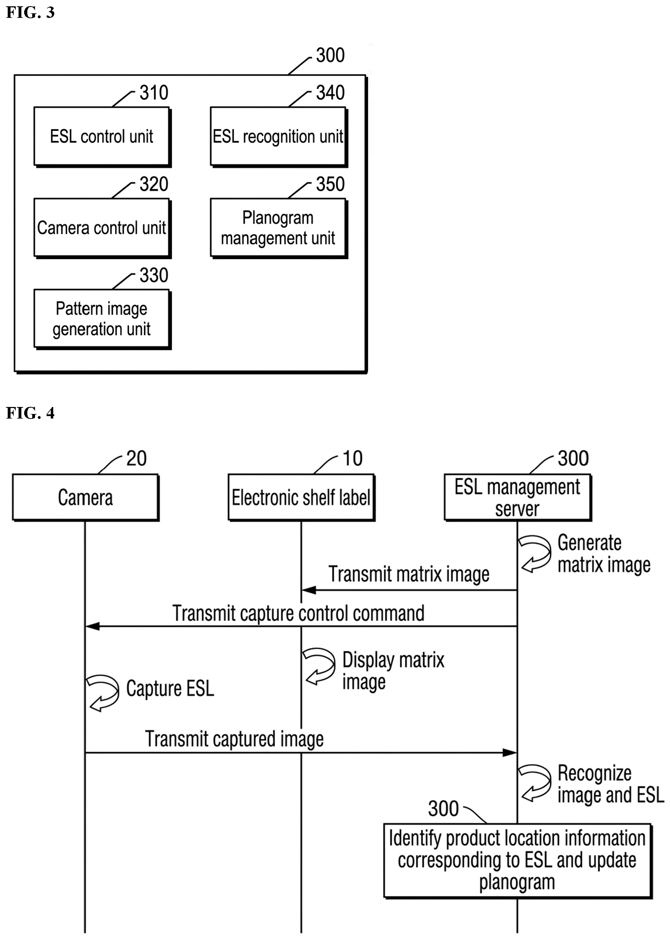

In an embodiment, the ESL management server 300 may match and store an electronic shelf label index corresponding to the generated pattern image. The ESL management server 300 may recognize the pattern images transmitted from the camera 20 and then identify stored electronic shelf label indices corresponding to each of the recognized plurality of electronic shelf labels. The ESL management server 300 may update a planogram in which location information corresponding to the recognized plurality of electronic shelf labels, locations of the plurality of products, and locations of shelves on which the plurality of products are arranged are mapped. Detailed functions of the ESL management server 300 will be described later with reference to FIG. 3.

FIG. 3 is a detailed schematic diagram illustrating the ESL management server 300 illustrated in FIG. 2.

Referring to FIG. 3, the ESL management server 300 may include an ESL control unit 310, a camera control unit 320, a pattern image generation unit 330, an ESL recognition unit 340, and a planogram management unit 350. Here, some components may be omitted, and additional components may be included.

The ESL control unit 310 manages the plurality of electronic shelf labels and manages and transmits price information and product information to be displayed on the electronic shelf labels.

The camera control unit 320 controls one or more cameras configured to capture one or more electronic shelf labels. When a pattern image is displayed on the electronic shelf label, the camera control unit 320 controls the camera so that the displayed pattern image may be captured. In addition, the camera control unit 320 may perform various image preprocessing operations on pattern images transmitted from the camera and may perform image processing for extracting only pattern images to be recognized.

The pattern image generation unit 330 generates pattern images to be transmitted to the plurality of electronic shelf labels and may manage the pattern images by matching the pattern images with information of the corresponding electronic shelf labels, for example, identification IDs.

The ESL recognition unit 340 extracts an electronic shelf label region from an image of the electronic shelf label including a pattern image transmitted from the camera, and then recognizes the pattern image displayed in the corresponding region. Alternatively, the pattern image may be directly extracted from the image. The ESL recognition unit 340 may determine whether a match exists by comparing the pattern image extracted from the image with prestored matching information. When the match is confirmed, location information of the corresponding electronic shelf label may be identified, since the image is captured by a camera installed at a fixed position within the store.

In the embodiment, although it has been described that the ESL management server 300 performs all functions, the system may further include a separate image processing server (not illustrated) that controls camera capturing and processes images captured by the camera to identify matching information between the electronic shelf labels and pattern images, and the image processing server (not illustrated) may transmit a result of the identification to the ESL management server 300.

The planogram management unit 350 may update a planogram including product display, inventory management, and price information by using a recognition result of the ESL recognition unit 340, that is, location information of the electronic shelf labels.

FIG. 4 is a flowchart illustrating a method for recognizing an electronic shelf label according to another embodiment.

Referring to FIG. 4, the ESL management server 300 generates a matrix image or matrix pattern image. The matrix image may be randomly generated so that each matrix image corresponds to the respective electronic shelf label. The generated matrix images are transmitted to the corresponding electronic shelf labels 10. The ESL management server 300 may also transmit a capture control command to the camera 20 arranged at a fixed position to capture the electronic shelf labels 10. Here, the ESL management server 300 may synchronize the timing at which the matrix image is displayed on the electronic shelf label 10 with the timing at which the camera 20 captures the image, thereby reducing unnecessary power consumption.

The electronic shelf label 10 that receives the matrix image displays the matrix image on the display area of the electronic shelf label 10 for a predetermined time or during a predetermined period.

The camera 20 acquires an image obtained by capturing the electronic shelf label 10 according to the capture control command from the ESL management server 300. The camera 20 transmits the captured image to the ESL management server 300. Here, the captured image may include a plurality of electronic shelf labels and matrix images displayed on the respective electronic shelf labels.

The ESL management server 300 recognizes the electronic shelf label by recognizing the matrix image in the captured image received from the camera 20. Based on the recognition result, location information corresponding to the electronic shelf label and product location information may be identified. In addition, the planogram may be updated using the recognition result.

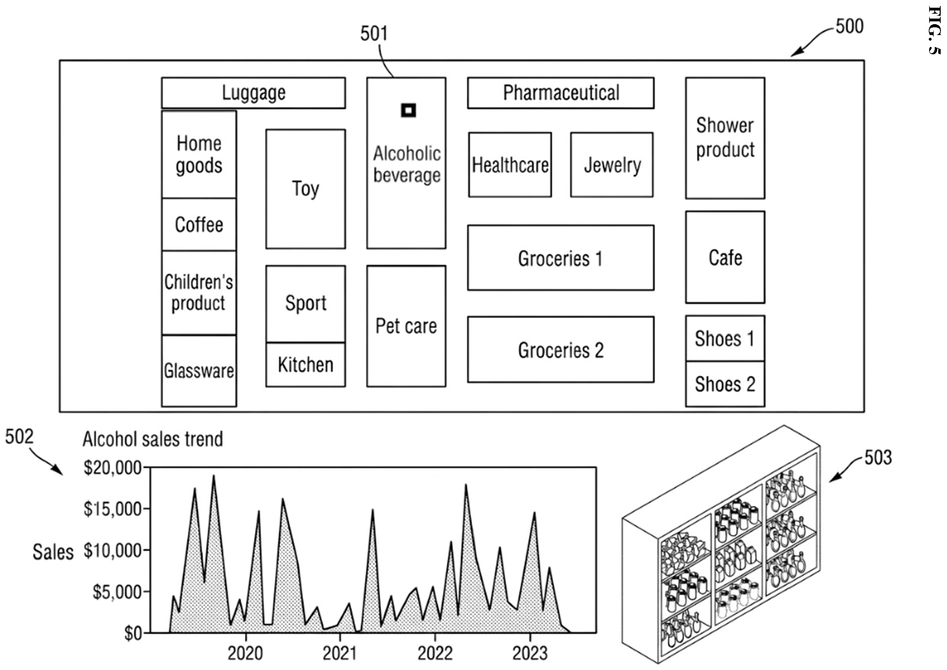

FIG. 5 is an exemplary diagram illustrating an example using a recognition result of the electronic shelf label according to still another embodiment.

Referring to FIG. 5, an overall product arrangement screen 500 of a store is illustrated. When a specific product category is selected (501), sales trend analysis data 502 for the corresponding product and an image screen 503 capturing the corresponding product category may be displayed. According to an embodiment, based on a recognition result of the electronic shelf label, that is, through identification of a location of the corresponding product and identification of the product, data of the above-described planogram may be updated.

According to embodiments of the present disclosure, the electronic shelf label recognition system displays a specific identification code on the electronic shelf label and recognizes the electronic shelf label by capturing the displayed identification code using the camera. Accordingly, location information of products and product-related information may be easily managed. In addition, the system may be utilized for automatic assignment of the electronic shelf labels in association with a planogram or a planogram database.

The electronic shelf label recognition algorithm according to an embodiment may also be implemented in the form of a recording medium including computer-executable instructions such as program modules executed by a computer. The computer-readable medium may be any available medium that can be accessed by a computer, and may include both volatile and non-volatile media and removable and non-removable media. In addition, the computer-readable medium may include both computer storage media and communication media. The computer storage media include both volatile and non-volatile media and removable and non-removable media implemented in any method or technology for storage of information such as computer-readable instructions, data structures, program modules, or other data. The communication media typically embody computer-readable instructions, data structures, program modules, or other data in a modulated data signal, or other transmission mechanisms, and include any information delivery media.

The above description of the embodiments is merely illustrative, and those skilled in the art will appreciate that various modifications and equivalent embodiments are possible. Accordingly, the true scope of the present disclosure should be defined by the appended claims, and all differences within the equivalent scope of the claims should be interpreted as being included in the scope of the present disclosure.

### [Industrial Applicability]

The present disclosure has industrial applicability in that it can improve efficiency of product management in a store by providing an electronic shelf label recognition system that captures, using a camera, a specific identification code displayed on an electronic shelf label provided on a shelf, recognizes the corresponding electronic shelf label based on an image capturing the identification code, and easily manages location information and product-related information of a product corresponding to the electronic shelf label.

## Claims

1. An electronic shelf label recognition system, comprising:
a plurality of electronic shelf labels disposed on a shelf on which a plurality of products are displayed, the plurality of electronic shelf labels corresponding respectively to the plurality of products;
a plurality of cameras configured to capture the plurality of electronic shelf labels; and
an electronic shelf label management server configured to manage the plurality of electronic shelf labels, recognize the plurality of electronic shelf labels captured by the plurality of cameras, and manage location information corresponding to the recognized plurality of electronic shelf labels,
wherein the electronic shelf label management server generates a pattern image corresponding to each of the plurality of electronic shelf labels, controls the generated pattern image to be displayed on a corresponding electronic shelf label, acquires the displayed pattern images through the plurality of cameras, and recognizes the electronic shelf labels based on the acquired pattern images.

2. The electronic shelf label recognition system of claim 1, further comprising a shared gateway connected to the plurality of electronic shelf labels through a predetermined network,
wherein the electronic shelf label management server manages the plurality of electronic shelf labels through the shared gateway.

3. The electronic shelf label recognition system of claim 2, wherein the electronic shelf label management server generates a pattern image corresponding to a recognized electronic shelf label when the plurality of electronic shelf labels are recognized through the shared gateway, and transmits the generated pattern image to the corresponding electronic shelf label through the shared gateway.

4. The electronic shelf label recognition system of claim 2, wherein the electronic shelf label management server transmits the generated pattern image to the corresponding electronic shelf label through the shared gateway when product information including price information is transmitted to the plurality of electronic shelf labels through the shared gateway.

5. The electronic shelf label recognition system of claim 2, wherein the electronic shelf label management server controls a timing at which the generated pattern image is displayed on the corresponding electronic shelf label and a capturing timing of the plurality of cameras to be synchronized.

6. The electronic shelf label recognition system of claim 1, wherein the plurality of cameras are disposed on a shelf facing the shelf on which the plurality of products are displayed.

7. The electronic shelf label recognition system of claim 1, wherein the electronic shelf label management server stores an electronic shelf label index corresponding to the generated pattern image in a matched manner.

8. The electronic shelf label recognition system of claim 7, wherein the electronic shelf label management server identifies the stored electronic shelf label index corresponding to each of the recognized electronic shelf labels.

9. The electronic shelf label recognition system of claim 1, wherein the electronic shelf label management server updates a planogram by mapping location information corresponding to the recognized plurality of electronic shelf labels with locations of the plurality of products and locations of shelves on which the plurality of products are arranged.

10. The electronic shelf label recognition system of claim 1, wherein the pattern image is an N x N matrix pattern image (N being a natural number greater than or equal to 2).
